# FASCICULE DE BREVET EUROPEEN

(11) **EP 0 884 358 B1**
(45) Date de publication et mention de la délivrance du brevet: **23.07.2003**
(21) Numéro de dépôt: 98401274.0
(22) Date de dépôt: 28.05.1998
(51) Int. Cl.: C08L 27/16, C08K 5/00

(54) **Compositions à base de poly(fluorure de vinylidène), souples et résilientes, leur procédé de préparation**
Weiche und schlagzähe Polyvinylidenfluoridzusammensetzungen und Verfahren zu ihrer Herstellung
Flexible and impact-resistant polyvinylidene fluoride compositions and process for their preparation

(30) Priorité: 12.06.1997 FR 9707279
(43) Date de publication de la demande: 16.12.1998
(73) Titulaire: Atofina, 92800 Puteaux (FR)
(72) Inventeur: Pascal, Thierry M., 69390 Charly (FR); Schlund, Bruno M., 69630 Chaponost (FR)

(56) Documents cités:
- EP-A- 0 301 949
- EP-A- 0 608 939
- EP-A- 0 714 944
- FR-A- 2 592 655
- CHEMICAL ABSTRACTS, vol. 122, no. 26, 26 juin 1995 Columbus, Ohio, US; abstract no. 316152, XP002078217 & JP 07 033939 A (CENTRAL GLASS CO LTD, JAPAN) 3 février 1995

## Description

La présente invention concerne le domaine des polymères et a pour objet des compositions à base de polymère(s) fluoré(s) et leur procédé de préparation.

Les homopolymères et copolymères fluorés sont connus pour leur bonne tenue thermique, leur résistance chimique, notamment aux solvants, résistance aux intempéries et aux rayonnements, (UV, etc.), leur imperméabilité aux gaz et aux liquides, leur qualité d'isolants électriques. Ils sont notamment utilisés pour la fabrication de tuyaux pour véhiculer des hydrocarbures extraits de gisements pétroliers situés sous la mer (offshore) ou non (on-shore). Les hydrocarbures sont parfois transportés à des températures élevées (de l'ordre de 135 °C) et sous haute pression (par exemple 70 MPa). Lors du fonctionnement des installations, il se pose donc des problèmes aigus de résistance mécanique, thermique et chimique des matériaux mis en oeuvre. D'autres exigences viennent s'y ajouter avant ou après le service : ainsi, lors de leur élaboration, leur installation et/ou leur enlèvement, (débobinage-bobinage), les tuyaux peuvent subir des chocs et des efforts en flexion auxquels ils doivent également résister et ce, parfois, à des températures particulièrement basses (par exemple -35 °C).

Pour tenter de faire face à ces exigences à court et long termes, divers types de matériaux ont été proposés, comprenant généralement un ou plusieurs éléments métalliques garantissant la rigidité mécanique, par exemple un ruban d'acier spiralé, ainsi que diverses couches à base de compositions polymériques, assurant notamment l'étanchéité et l'isolation thermique. Ces compositions, souvent à base de polymères fluorés et notamment de poly (fluorure de vinylidène) (PVDF) semi-cristallin sont souvent plastifiées pour pallier un manque de souplesse, une faible déformation au seuil d'écoulement et une résilience insuffisante, ce qui a pour inconvénient l'extraction plus ou moins rapide des plastifiants par les hydrocarbures transportés, conduisant progressivement à une perte des propriétés apportées par la plastification (souplesse, résilience, etc.) s'accompagnant en général de phénomènes de retrait et limitant par conséquent la durée de vie des articles à base de ces compositions.

Afin de résoudre certains de ces problèmes, on a remplacé les polymères fluorés éventuellement plastifiés par des compositions polymériques comprenant un homopolymère de PVDF, un copolymère thermoplastique de fluorure de vinylidène (VF2) et d'au moins un autre monomère fluoré (EP 608.939 et EP 608.940) et un plastifiant (EP 608.939). Cependant le contrôle rigoureux et précis de la morphologie de tels mélanges impose d'utiliser des appareillages complexes et onéreux rendant donc cette solution technique difficilement accessible ; on constate d'autre part que ces mélanges présentent une résilience limitée à basse température et une mauvaise résistance au gonflement par exemple au contact d'hydrocarbures et une tenue chimique inférieure à celle du PVDF seul et une extraction du plastifiant éventuel au contact de certaines substances chimiques.

Des particules d'élastomère ont également été incorporées au PVDF (FR 2.592.655 et FR 2.618.791) dans le but d'absorber les hydrocarbures et de les fixer dans la masse du mélange, la proportion d'élastomère au sein du mélange ne devant pas dépasser 25 % de la masse totale. De tels mélanges présentent une résilience améliorée par rapport au PVDF seul, mais leur souplesse est insuffisante pour certaines applications envisagées et notamment pour le transport et/ou le stockage d'hydrocarbures car ce type de mélange est peu souple lorsqu'il n'est pas en contact direct avec les hydrocarbures. FR 2.592.655 a décrit des mélanges contenant en sus au moins 10 % en poids de plastifiant, qui, s'ils possèdent à la fois la souplesse et la résistance au choc souhaitées, laissent tôt ou tard exsuder le plastifiant.

La demande de brevet EP 0714944 décrit des compositions comprenant une matrice de PVDF dans laquelle sont dispersés des nodules d'élastomères vulcanisés, éventuellement assouplis par des plastifiants. Ces compositions présentent une très bonne résistance au choc multiaxial mais la quantité d'élastomères de 26,6 ou de 50 parties en poids pour 100 parties en poids de PVDF 1000 (exemples 6 et 11 ) est si élevée que ces compositions manquent de stabilité thermique et chimique à 150°C. De plus, ces compositions ont l'inconvénient d'avoir une forte perméabilité sous pression et une mauvaise résistance à la décompression rapide de gaz chauds sous pression (« blistering »).

La présente invention se propose de résoudre les problèmes techniques évoqués ci-dessus et a pour objet une composition souple et résiliente comprenant
- au moins un homopolymère (A) de fluorure de vinylidène (VF2) ou un copolymère (A) de VF2 et d'au moins un autre monomère copolymérisable avec VF2, dans lequel pour 100 parties en poids de VF2 ledit monomère est présent en une quantité comprise entre 0 et 30 parties en poids,
- au moins un élastomère B,
- au moins un plastifiant C,
caractérisée en ce que, d'une part, ladite composition comprend pour 100 parties en poids de A, de 0,5 à 10 parties en poids de B et de 0,5 à 10 parties en poids de C, avec la condition supplémentaire que la somme de B plus C soit de 1 à 10,5 parties en poids et, d'autre part, en ce que l'homopolymère ou le copolymère de fluorure de vinylidène A soit choisi de telle sorte qu'il possède un indice de fluidité, mesuré selon la norme ISO 1133 à 230 °C sous une charge de 5 kg, inférieur à 5 g/10 min et un module critique G_{C}, à l'intersection des modules de cisaillement à l'état fondu G' et G" mesuré à 190°C, compris entre 5 et 22 kPa, ladite composition présentant les propriétés suivantes :
un allongement au seuil d'écoulement εy supérieur à 11 %, un allongement à la rupture εr supérieur à 200 %, une résistance au choc à 23 °C supérieure à 50 kJ/m² et une résistance au choc à -30 °C supérieure à 10 kJ/m² mesurées selon la norme ISO 180-1982, une résistance à la rupture en flexion sur feuillard métallique gainé supérieure à 50 %, une perte massique Δp dans de l'air à 150 °C pendant 1 mois inférieure ou égale à 8 % et une variation massique Δp dans du pétrole (mélange équivolumique de cyclohexane, isooctane et de xylène) à 150 °C pendant 1 mois, qui n'est pas négative (ladite composition ne perd pas de poids dans le pétrole).

Le module critique G_{C} est déterminé à 190 °C à l'aide d'un spectromètre mécanique dynamique, par exemple de type Rheometrics RMS 800, en utilisant un viscosimètre plan-plan de diamètre 25 mm.

De préférence, ledit autre monomère est présent en une quantité relative comprise entre 0 et 5 parties en poids.

De préférence, ledit autre monomère est un monomère fluoré.

Avantageusement, B est présent en une quantité relative de 0,5 à 5 parties en poids pour 100 parties en poids de A.

Avantageusement, C est présent en une quantité relative de 0,5 à 5 parties en poids pour 100 parties en poids de A.

Les polymères fluorés A des compositions selon l'invention sont choisis parmi les homopolymères ou copolymères de VF2 à cause de leur excellente inertie chimique en présence de pétrole ou gaz brut de gisement et de leur stabilité à haute température.

De préférence, les compositions selon l'invention comprennent 100 parties en poids d'homopolymère de fluorure de vinylidène, 2,1 parties en poids de B et 3,2 parties en poids de C, l'homopolymère étant choisi de façon à avoir un MFI mesuré à 230° C, de 0,7 et un module critique Gc, mesuré à 190° C, de 20 kPa.

Avantageusement, en ce qui concerne ces dernières compositions, B est un élastomère acrylique et C est du Dibutylsébaçate.

Les élastomères B utilisables dans le cadre de l'invention peuvent être choisis parmi les élastomères vrais et les élastomères thermoplastiques (TPE). Les élastomères vrais ou caoutchoucs, naturels ou synthétiques, sont définis par la norme ASTM, Special Technical Bulletin, n° 184 comme des matériaux susceptibles d'être étirés, à la température ambiante, jusqu'à deux fois leur propre longueur et qui, une fois relâchés après maintien sous tension pendant 5 minutes, reprennent à 10 % près, leur longueur initiale dans le même temps. Les TPE présentent un allongement au seuil d'écoulement supérieur à 15 %. Les TPE se situent entre les résines thermoplastiques, à mise en oeuvre facile et variée, mais à propriétés limitées en température ou dans le domaine dynamique et les élastomères aux propriétés élastiques remarquables, mais dont la mise en oeuvre est lourde, complexe et souvent polluante. La structure des TPE comporte toujours deux phases non compatibles, l'une d'entre elles rassemblant les séquences thermoplastiques dispersées dans la phase élastomère. On distingue en général 5 catégories de TPE :
- les élastomères thermoplastiques polyoléfiniques (TPO) sont des mélanges physiques réalisés à partir de polyoléfines. On distingue ceux qui contiennent plus de 60% de polypropylène et ceux dont la phase élastomère est prépondérante (plus de 70 %), celle-ci pouvant être réticulée ou non,
- les copolymères blocs à base de polystyrène dont la phase rigide est constituée de séquences polystyrène, la phase souple pouvant être par exemple formée de séquences polybutadiène (SBS), polyisoprène (SIS) ou poly(éthylène-butylène) (SEBS),
- les copolymères blocs à base de polyuréthanne (TPU) qui peuvent être obtenus par réaction conjointe d'un diol de haute masse moléculaire qui constitue la séquence souple cristallisable du TPE, sur un diisocyanate et un diol de basse masse moléculaire qui engendrent la séquence rigide,
- les copolymères blocs à base de polyester tels que ceux obtenus par copolymérisation d'un polybutylène (PBT) ou d'un polyéthylène téréphtalate (PET) qui constitue les séquences rigides et cristallines et d'un glycol de bas poids moléculaire (butane diol, diéthylène glycol) qui, associé à un polyalkylène éther glycol forme la séquence souple cristallisable,
- les copolymères blocs à base de polyamide tels ceux dont les séquences rigides sont constituées de polyamide (PA) et les séquences souples cristallisables de polyéther, appelés aussi polyétheramides ainsi que les polyesteramides.

Les élastomères et TPE peuvent être avantageusement choisis parmi les caoutchoucs naturels, les polyuréthannes, les copolymères éthylène-propylène-diène maléisé (EPDM), les copolymères acrylonitrile-butadiène-styrène (ABS), les copolymères méthacrylate de méthyle-butadiène-styrène (MBS), les copolymères blocs à base de polyamide (polyétheramides, polyesteramides, polyétheresteramides), les copolymères éthylène-oxyde de carbone, les caoutchoucs acryliques, notamment les particules core-shell à écorce polyacrylique, les SBS, SIS, les copolymères éthylène-acrylate d'éthyle, éthylène-acétate d'éthyle, éthylène-acétate de vinyle ainsi que leurs terpolymères.

De préférence, l'élastomère B est choisi parmi les copolymères méthacrylate de méthyle-butadiène-styrène (MBS) et les caoutchoucs acryliques.

Avantageusement, le caoutchouc acrylique est sous forme de particules core-shell à écorce polyacrylique.

Les plastifiants C peuvent être choisis parmi les plastifiants usuels et notamment ceux décrits dans US 3.541.039 et US 4.584.215. De préférence, le plastifiant est choisi parmi le Dibutylsébaçate et le N-n-butylsulfonamide.

Outre les constituants A, B et C décrits ci-dessus, les compositions selon l'invention peuvent contenir divers additifs et/ou charges et/ou colorants et/ou pigments, organiques ou minéraux, macromoléculaires ou non, bien connus dans la littérature.

A titre d'exemples non limitatifs de charges, on peut citer le mica, l'alumine, le talc, le noir de carbone, les fibres de verre, de carbone, des composés macromoléculaires.

A titre d'exemples non limitatifs d'additifs, on peut citer les agents anti-U.V., les agents ignifugeants, les stabilisants chaleur, les agents de transformation ou « processing aids ».

La somme de ces additifs et charges divers représente en général moins de 20 % de la masse totale A+B+C.

Avantageusement, la préparation des compositions selon l'invention est réalisée par mélange à l'état fondu des composants A, B et C.

La composition selon l'invention peut être préparée par mélange à l'état fondu de l'homopolymère ou du copolymère de vinylidène A avec le ou les élastomères B - initialement sous forme de poudres, de granulés - dans une extrudeuse, un mélangeur à cylindres ou tout type d'appareil de mélange adapté.

Il est également possible de mélanger un latex de d'homopolymère ou de copolymère de vinylidène avec le ou les élastomères sous forme de poudre ou de latex.

Le ou les plastifiants ainsi que les additifs éventuels peuvent être incorporés dans les compositions lors du mélange de A et de B, soit mélangés à l'un ou l'autre de ces constituants préalablement à l'étape de mélange de A et de B, soit postérieurement au mélange de A et de B selon les techniques de mélange énoncées plus haut.

Les compositions selon l'invention peuvent être utilisées pour la réalisation de matériaux soumis à des contraintes dans des conditions de haute et/ou de basse température, au contact de substances particulièrement agressives (telles que hydrocarbures, acides forts, solvants, bases minérales et organiques) au cours desquelles leurs propriétés de résilience et de souplesse sont particulièrement requises.

Comme indiqué plus haut, les compositions selon l'invention sont particulièrement adaptées pour la fabrication de gaines d'étanchéité de conduites métalliques flexibles pour l'extraction et/ou le transport de gaz et d'hydrocarbures dans les industries pétrolière et gazière.

Ces gaines d'étanchéité se présentent en général sous forme de tubes monocouches ou multicouches, fabriqués par extrusion ou co-extrusion dans lesquels on insère ensuite la conduite métallique flexible ou bien formés directement sur la conduite flexible par les techniques usuelles de surgainage.

La composition selon l'invention peut être utilisée dans des gaines d'étanchéité multicouches comme celles qui ont été décrites par exemple dans le brevet US 5601893.

Les compositions selon l'invention sont également bien adaptées pour la réalisation par extrusion de pièces de génie chimique, notamment sous forme de tuyaux, de tubes, ainsi que pour la réalisation d'objets dans le domaine des industries du bâtiment et des travaux publics, tels que gaines de câbles, haubans ainsi que de films et de feuilles mono- ou multicouches pour tout genre d'industrie.

La composition selon l'invention peut être utilisée également dans des gaines de fils, torons, câbles et haubans comme ceux qui ont été décrits dans les demandes de brevet EP 671.502 et EP 671.746.

### Exemples

A l'aide d'une extrudeuse monovis de diamètre 40 mm (L/D = 33 ; taux de compression = 3,5) régulée à 220 °C, on extrude des compositions (Ai Bj Ck x) contenant au moins un des 7 polymères fluorés A1 à A7, un des 4 élastomères B1 à B4 et un des 2 plastifiants C1 et C2. Selon les proportions respectives des différents constituants, les compositions sont référencées α à η.

Le Tableau 1 indique l'indice de fluidité à chaud des polymères fluorés Ai qui sont des homopolymères ou un copolymère de VF2 ainsi que leur module critique ; l'indice de fluidité MFI est mesuré selon la norme ISO 1133 à 230 °C sous une charge de 5 kg et le module critique G_{C} est déterminé à 190 °C à l'aide d'un spectromètre mécanique dynamique, par exemple de type Rheometrics RMS 800, en utilisant un viscosimètre plan-plan de diamètre 25 mm.

Le Tableau 2 indique la nature chimique, la dénomination commerciale et les fournisseurs des élastomères Bj.

Le Tableau 3 indique la nature chimique ainsi que la famille à laquelle appartiennent les plastifiants Ck ; le Tableau 4 indique les proportions pondérales des constituants des compositions illustrées et la référence des compositions correspondantes.

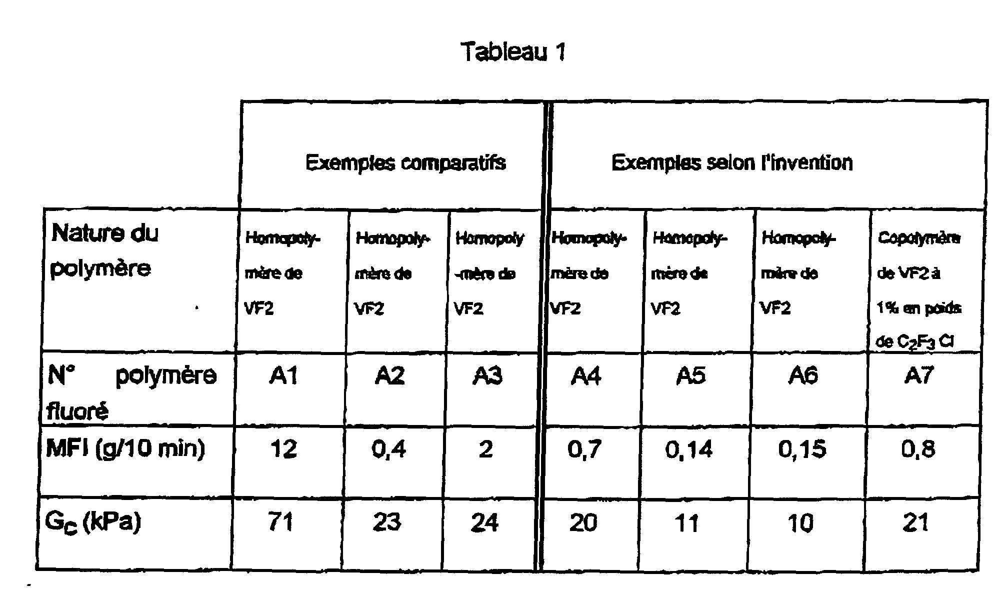

Les homo- ou copolymères de VF2 ont été préparés par les procédés classiques de polymérisation radicalaire en émulsion ou en suspension, tels que décrits dans les demandes de brevets EP 709429, FR 2286153, FR 2610325. Ils peuvent également être préparés en solution ou en masse.

**Tableau 2**

| N° élastomère | Nature élastomère | Dénomination commerciale | Fournisseur |
|---|---|---|---|
| B1 | élastomère acrylique | Durastrength® D 200 | Ceca (France) |
| B2 | élastomère acrylique | Paraloid® E 653 | Rohm et Haas |
| B3 | élastomère de silicone | Metablen S 2001 | Mitsubishi ou Elf Atochem S.A. |
| B4 | caoutchouc NBR | Therban® 1907 | Bayer |

Plus précisément, l'élastomère B1 est préparé par polymérisation radicalaire en phase aqueuse de monomères acryliques selon les brevets US 3264373 ou US 3562235.
L'élastomère B2 est obtenu par polymérisation radicalaire en phase aqueuse et est composé d'une phase majoritaire constituée de copolymère de méthyle méthacrylate, de butadiène et de styrène (MBS) et d'une phase à base de polyacrylate.
L'élastomère B3 est composé de deux phases polymères interpénétrées : l'une à base de polyacrylate, l'autre à base de polymère de silicone.
L'élastomère B4 est obtenu par polymérisation radicalaire en émulsion. C'est un copolymère de butadiène et d'acrylonitrile partiellement hydrogéné pour augmenter sa stabilité thermique.

**Tableau 3**

| N° plastifiant | Type plastifiant | Nature |
|---|---|---|
| C1 | ester | Dibutylsébaçate (DBS) |
| C2 | sulfonamide | N-n-butylsulfonamide (BBSA) |

**Tableau 4**

| N° composition | % polymère fluoré | % élastomère | % plastifiant |
|---|---|---|---|
| α | 95,5 | 2 | 2,5 |
| β | 96 | 1,5 | 2,5 |
| χ | 93,5 | 4 | 2,5 |
| δ∗ | 90 | 0 | 10 |
| ε∗ | 90 | 10 | 0 |
| φ | 90 | 5 | 5 |
| γ∗ | 98 | 2 | 0 |
| η∗ | 96 | 4 | 0 |

| | | | |
|---|---|---|---|
| ∗ Compositions comparatives hors invention. | | | |

On teste les compositions présentées ci-dessus en mesurant la résistance à la traction, au choc IZOD, à la flexion sur feuillard métallique gainé ainsi que la stabilité thermique et chimique.
- L'allongement à la traction est mesuré sur des plaques d'épaisseur 0,7 mm préparées à partir des compositions extrudées décrites précédemment et moulées à 205 °C avec une presse à plateaux. Des éprouvettes de traction de type ASTM D 1708 sont découpées à l'aide d'emporte-pièce dans lesdites plaques. L'allongement à la traction (déformation au seuil d'écoulement εy et déformation à la rupture εr) est mesuré selon la norme ASTM D 638 à température ambiante.
- La résistance au choc IZOD avec entaille (mesurée à 23 °C et à -30 °C) est pratiquée sur des éprouvettes injectées à 230 °C de dimensions 80*10*4 mm, l'entaillage et le protocole d'essai étant conformes à la norme ISO 180-1982.
- La résistance à la flexion sur feuillard métallique gainé est évaluée à température ambiante sur une structure métallique souple (feuillard agrafé de diamètre externe égal à 29 mm) gainée à l'aide des compositions illustrées extrudées avec une tête d'équerre ; la gaine a une épaisseur moyenne de 4 mm, la température d'extrusion lors du gainage étant comprise entre 200 et 250 °C. Le tube ainsi gainé est placé sur deux supports fixes distants de 250 mm. Au moyen d'un galet de cintrage de 80 mm de diamètre, on appuie à équidistance des points d'appui du tube en exerçant une pression suffisante pour provoquer le fléchissement du tube jusqu'à sa rupture. On mesure la hauteur d'enfoncement du galet qui indique l'aptitude à la déformation du tube flexible. Le rapport de la hauteur d'enfoncement mesurée à la rupture à une hauteur maximale d'enfoncement fixée à 160 mm, correspond à la résistance à la flexion sur feuillard métallique gainé.
- La stabilité thermique et chimique est appréciée en mesurant la variation de poids Δp entre un échantillon extrudé de 3 mm d'épaisseur et de masse 5 g de composition donnée et un échantillon identique placé pendant 1 mois à 150 °C dans un milieu donné (air ou pétrole(1/3 en volume de cyclohexane, 1/3 isooctane, 1/3 xylène) dont on mesure également la résistance à la traction (εy et εr). Un signe - (négatif) correspond à une perte de poids.
- La stabilité chimique est appréciée en mesurant la variation de poids Δp entre un échantillon extrudé de 3 mm d'épaisseur et de masse 5 g de composition donnée et un échantillon identique placé pendant 7 jours à 50 °C dans une solution de HCI concentré à 37 % en poids puis rincé à l'eau distillée et étuvé 24 h à 150 °C. Un signe - (négatif) correspond à une perte de poids.

Tous les résultats sont réunis dans le Tableau 5.

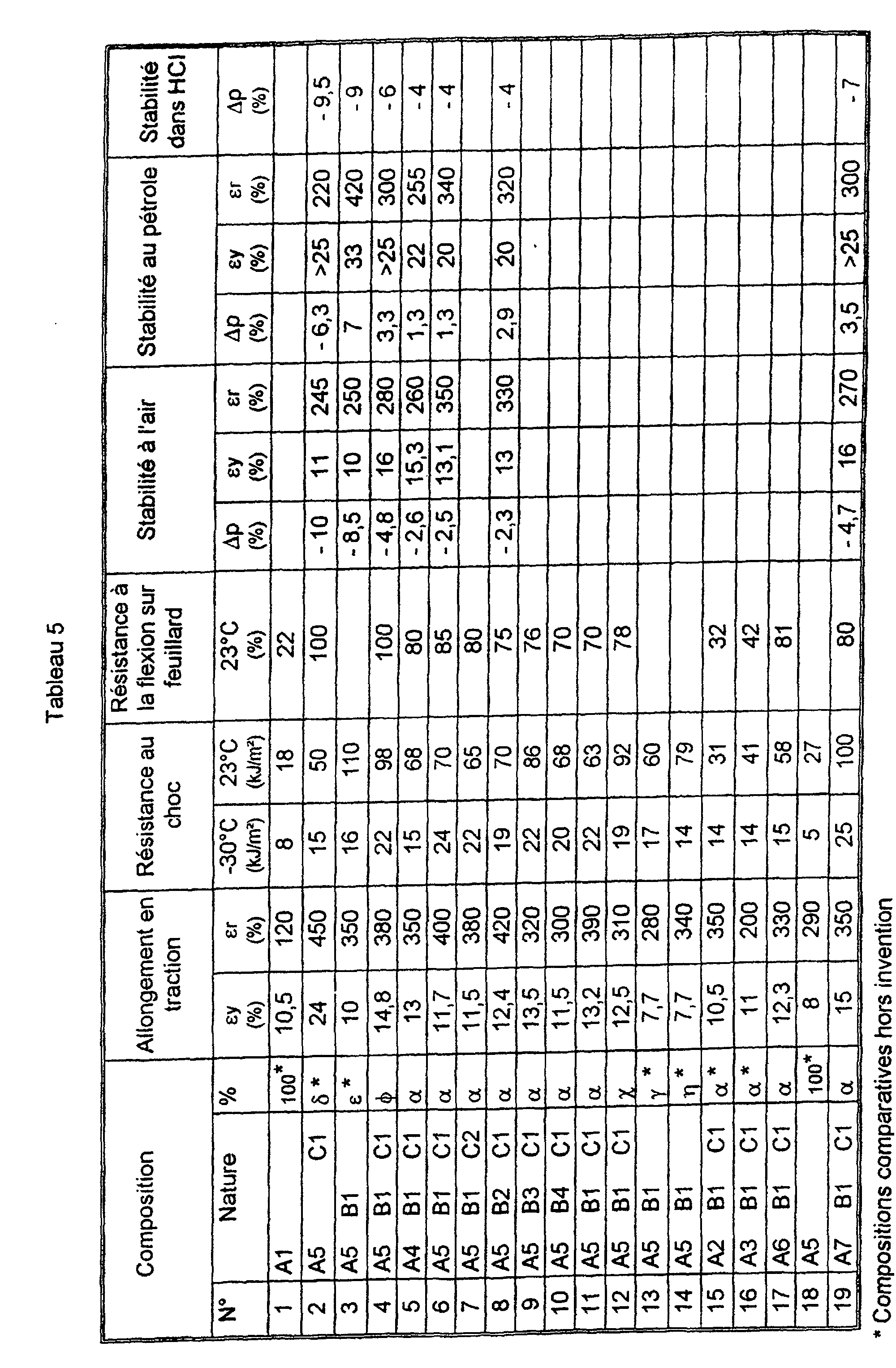

La composition préférée pour la fabrication de tuyaux destinés à la circulation d'hydrocarbures liquides est, dans le Tableau ci-dessus la composition N° 5 : A4 B1 C1 α.

## Revendications

1. Composition souple et résiliente comprenant :
- au moins un homopolymère (A) de fluorure de vinylidène (VF2) ou un copolymère (A) de VF2 et d'au moins un autre monomère copolymérisable avec VF2, dans lequel pour 100 parties en poids de VF2 ledit monomère est présent en une quantité comprise entre 0 et 30 parties en poids,
- au moins un élastomère B,
- au moins un plastifiant C,
**caractérisée en ce que**, d'une part, ladite composition comprend pour 100 parties en poids de A, de 0,5 à 10 parties en poids de B et de 0,5 à 10 parties en poids de C, avec la condition supplémentaire que la somme de B plus C soit de 1 à 10,5 parties en poids et, d'autre part, **en ce que** l'homopolymère ou le copolymère de fluorure de vinylidène A soit choisi de telle sorte qu'il possède un indice de fluidité, mesuré selon la norme ISO 1133 à 230 °C sous une charge de 5 kg, inférieur à 5 g /10 min et un module critique G_{C}, à l'intersection des modules de cisaillement à l'état fondu G' et G" mesuré à 190°C, compris entre 5 et 22 kPa, ladite composition présentant les propriétés suivantes : un allongement au seuil d'écoulement εy supérieur à 11 %, un allongement à la rupture εr supérieur à 200 %, une résistance au choc à 23 °C supérieure à 50 kJ/m² et une résistance au choc à -30 °C supérieure à 10 kJ/m² mesurées selon la norme ISO 180-1982, une résistance à la rupture en flexion sur feuillard métallique gainé supérieure à 50 %, une perte massique Δp dans de l'air à 150 °C pendant 1 mois inférieure ou égale à 8 % et une variation massique Δp dans du pétrole (mélange équivolumique de cyclohexane, isooctane et de xylène) à 150 °C pendant 1 mois, qui n'est pas négative.

2. Composition selon la revendication 1, **caractérisée en ce que** ledit autre monomère est présent en une quantité comprise entre 0 à 5 parties en poids.

3. Composition selon la revendication 1 ou 2, **caractérisée en ce que** ledit autre monomère est un monomère fluoré.

4. Composition selon l'une des revendications 1 à 3, **caractérisée en ce que** B est présent en une quantité relative de 0,5 à 5 parties en poids.

5. Composition selon l'une des revendications 1 à 4, **caractérisée en ce que** C est présent en une quantité relative de 0,5 à 5 parties en poids.

6. Composition selon l'une des revendications 1 à 5 **caractérisée en ce que** l'élastomère thermoplastique B est choisi parmi les copolymères méthacrylate de méthyle-butadiène-styrène (MBS) et les caoutchoucs acryliques.

7. Composition selon la revendication 6, **caractérisée en ce que** le caoutchouc acrylique est sous forme de particules core-shell à écorce polyacrylique.

8. Composition selon l'une des revendications 1 à 7, **caractérisée en ce qu'**elle comprend 100 parties en poids d'homopolymère de fluorure de vinylidène, 2,1 parties en poids de B et 3,2 parties en poids de C, l'homopolymère étant choisi de façon à avoir un MFI mesuré à 230° C, de 0,7 et un module critique G_{C,}, mesuré à 190° C, de 20 kPa.

9. Composition selon la revendication 8, **caractérisé en ce que** B est un élastomère acrylique et C est du Dibutylsébaçate.

10. Procédé de préparation de la composition selon l'une des revendication 1 à 9 par mélange à l'état fondu des composants A, B et C.

## Patentansprüche

1. Weiche und schlagzähe Zusammensetzung, die enthält:
- Mindestens ein Homopolymer (A) von Vinylidenfluorid (VF2) oder ein Copolymer (A) von VF2 und mindestens einem weiteren mit VF2 copolymerisierbaren Monomer, wobei das Monomer in einer Menge von 0 bis 30 Gewichtsteilen auf 100 Gewichtsteile VF2 vorliegt,
- mindestens ein Elastomer B,
- mindestens einen Weichmacher C,
**dadurch gekennzeichnet, dass** die Zusammensetzung auf 100 Gewichtsteile A 0,5 bis 10 Gewichtsteile B und 0,5 bis 10 Gewichtsteile C enthält, mit der zusätzlichen Maßgabe, dass die Summe von B und C im Bereich von 1 bis 10,5 Gewichtsteile liegt, und dadurch, dass das Homopolymer oder Copolymer von Vinylidenfluorid A so ausgewählt ist, dass es einen gemäß der Norm ISO 1133 bei 230° C unter einer Last von 5 kg gemessenen Schmelzindex unter 5 g/10 min und einen bei 190° C gemessenen kritischen Modul G_{c} am Schnittpunkt der Schermodulen G' und G" in geschmolzenem Zustand im Bereich von 5 bis 22 kPa besitzt, wobei die Zusammensetzung die folgenden Eigenschaften aufweist:
eine Dehnung bei Streckspannung εy über 11%, eine Reißdehnung εr über 200%, eine Schlagzähigkeit bei 23° C über 50 kJ/m² und eine Schlagzähigkeit bei -30° C über 10 kJ/m², die nach der Norm ISO 180-1982 gemessen werden, eine Biegebruchfestigkeit am umhüllten Metallband über 50%, eine Masseabnahme Δp an Luft bei 150° C während einer Zeitspanne von einem Monat von höchstens 8% und eine Masseänderung Δp in Erdöl (Gemisch von Cyclohexan, Isooctan und Xylol mit gleichen Volumina) bei 150° C während einer Zeitspanne von einem Monat, die nicht negativ ist.

2. Zusammensetzung nach Anspruch 1, **dadurch gekennzeichnet, dass** das andere Monomer in einer Menge von 0 bis 5 Gewichtsteilen vorliegt.

3. Zusammensetzung nach Anspruch 1 oder 2, **dadurch gekennzeichnet, dass** das andere Monomer ein fluoriertes Monomer ist.

4. Zusammensetzung nach einem der Ansprüche 1 bis 3, **dadurch gekennzeichnet, dass** B in einer relativen Menge von 0,5 bis 5 Gewichtsteilen vorliegt.

5. Zusammensetzung nach einem der Ansprüche 1 bis 4, **dadurch gekennzeichnet, dass** C in einer relativen Menge von 0,5 bis 5 Gewichtsteilen vorliegt.

6. Zusammensetzung nach einem der Ansprüche 1 bis 5, **dadurch gekennzeichnet, dass** das thermoplastische Elastomer B unter den Methylmethacrylat-Butadien-Styrol(MBS)-Copolymeren und Acrylkautschuken ausgewählt ist.

7. Zusammensetzung nach Anspruch 6, **dadurch gekennzeichnet, dass** der Acrylkautschuk in Form von Kern/Schale-Partikeln mit Polyacrylschale vorliegt.

8. Zusammensetzung nach einem der Ansprüche 1 bis 7, **dadurch gekennzeichnet, dass** sie 100 Gewichtsteile Vinylidenfluorid-Homopolymer, 2,1 Gewichtsteile B und 3,2 Gewichtsteile C enthält, wobei das Homopolymer so ausgewählt ist, dass es einen bei 230° C gemessenen MFI von 0,7 und einen bei 190° C gemessenen kritischen Modul G_{c} von 20 kPa aufweist.

9. Zusammensetzung nach Anspruch 8, **dadurch gekennzeichnet, dass** B ein Acrylelastomer und C das Dibutylsebacat ist.

10. Verfahren zur Herstellung der Zusammensetzung nach einem der Ansprüche 1 bis 9 durch Mischen der Komponenten A, B und C in geschmolzenem Zustand.

## Claims

1. Flexible and tough composition comprising:
- at least one homopolymer (A) of vinylidene fluoride (VF2) or a copolymer (A) of VF2 and of at least one other monomer copolymerizable with VF2, in which the said monomer is present in an amount of between 0 and 30 parts by weight per 100 parts by weight of VF2,
- at least one elastomer B,
- at least one plasticizer C,
**characterized in that**, on the one hand, the said composition comprises from 0.5 to 10 parts by weight of B and from 0.5 to 10 parts by weight of C per 100 parts by weight of A, with the additional condition that the sum of B and C is from 1 to 10.5 parts by weight and, on the other hand, **in that** the homopolymer or the copolymer of vinylidene fluoride, A, is chosen in such a way that it has a melt flow index, measured according to the ISO 1133 standard at 230°C under a load of 5 kg, of less than 5 g/10 min and a critical modulus G_{c}, at the intersection of the melt shear moduli G' and G" measured at 190°C, of between 5 and 22 kPa, the said composition having the following properties:
an elongation at the yield point, ε_{y}, of greater than 11%, an elongation at break ε_{b} of greater than 200%, an impact strength at 23°C of greater than 50 kJ/m² and an impact strength at -30°C of greater than 10 kJ/m², these being measured according to the ISO 180-1982 standard, a resistance to flexural rupture on a sleeved metal tape of greater than 50%, a weight loss Δw in air at 150°C for 1 month of less than or equal to 8% and a weight change Δw in petroleum (equal-volume mixture of cyclohexane, isooctane and xylene) at 150°C for 1 month which is not negative.

2. Composition according to Claim 1, **characterized in that** the said other monomer is present in an amount of between 0 and 5 parts by weight.

3. Composition according to Claim 1 or 2, **characterized in that** the said other monomer is a fluorinated monomer.

4. Composition according to one of Claims 1 to 3, **characterized in that** B is present in a relative amount of from 0.5 to 5 parts by weight.

5. Composition according to one of Claims 1 to 4, **characterized in that** C is present in a relative amount of from 0.5 to 5 parts by weight.

6. Composition according to Claims 1 to 5, **characterized in that** the thermoplastic elastomer B is chosen from methyl methacrylate-butadiene-styrene (MBS) copolymers and acrylic rubbers.

7. Composition according to Claim 6, **characterized in that** the acrylic rubber is in the form of core-shell particles with a polyacrylic skin.

8. Composition according to one of Claims 1 to 7, **characterized in that** it comprises 100 parts by weight of vinylidene fluoride homopolymer, 2.1 parts by weight of B and 3.2 parts by weight of C, the homopolymer being chosen so as to have an MFI measured at 230°C of 0.7 and a critical modulus G_{c}, measured at 190°C, of 20 kPa.

9. Composition according to Claim 8, **characterized in that** B is an acrylic elastomer and C is dibutyl sebacate.

10. Method of preparing the composition according to one of Claims 1 to 9, by melt blending the components A, B and C.
